# EUROPEAN PATENT SPECIFICATION

(11) **EP 2 445 036 B1**
(45) Date of publication and mention of the grant of the patent: **23.01.2013**
(21) Application number: 11179528.2
(22) Date of filing: 31.08.2011
(51) Int. Cl.: H01M 2/30

(54) **Terminal for sealed battery and manufacturing method therefor**
Anschlusspol für eine abgedichtete Batterie und Herstellungsverfahren dafür
Terminal pour batterie scellée et son procédé de fabrication

(30) Priority: 03.09.2010 JP 2010198249
(43) Date of publication of application: 25.04.2012
(73) Proprietor: Sanyo Electric Co., Ltd., Osaka 570-8677 (JP)
(72) Inventor: Obayashi, Atsushi, Moriguchi-shi, Osaka 5708677 (JP); Marubayashi, Hironori, Moriguchi-shi, Osaka 5708677 (JP)
(74) Representative: Glawe, Delfs, Moll

(56) References cited:
- EP-A2- 1 300 893
- US-A- 4 879 191
- US-A- 6 143 442

## Description

### TECHNICAL FIELD

The present invention relates to a terminal for a sealed battery including a terminal unit including an outer terminal and an inner terminal, and to a manufacturing method therefor. More particularly, the invention relates to a sealed battery terminal with structure such that the crimped portions between the outer terminal and inner terminal are located on the outside of the battery, so that change in the internal resistance between the outer terminal and inner terminal is suppressed, cost is low, and battery reliability is enhanced; and to a manufacturing method therefor.

### BACKGROUND ART

With the rapid spread of portable electronic equipment, the specifications required of the batteries used in such equipment have become more demanding year by year. Particularly required are batteries that are compact, thin, high-capacity, superior in cycling characteristics, and stable in performance. In the field of secondary batteries, lithium nonaqueous electrolyte secondary batteries are attracting attention for having high energy density compared with other batteries, and are accounting for an increasingly large share of the secondary battery market. Furthermore, with the rise of the environmental protection movement over recent years, restrictions on emissions of carbon dioxide and other exhaust gases that cause warming have been strengthened. Consequently, the automobile industry is engaging actively in development of electric vehicles (EVs) and hybrid electric vehicles (HEVs) to replace vehicles that use fossil fuels such as gasoline, diesel oil and natural gas. As the batteries for such EVs and HEVs, sealed batteries such as nickel-hydrogen secondary batteries and lithium ion secondary batteries are used. In recent years, nonaqueous electrolyte secondary batteries such as lithium ion secondary batteries have come to be used in large numbers for these applications, because they provide a battery that is both lightweight and high capacity.

For portable equipment applications, batteries are required to have high reliability, so that electrolyte will not leak out from them and their internal resistance will not change even if the portable equipment suffers an accident such as being subjected to vibration or being accidentally dropped. As regards EV and HEV applications, such automobiles are now required not only to be environment-friendly, but also to have basic performance as vehicles, that is, acceleration performance, gradient-climbing performance, and other high-level driving capabilities. In order to satisfy such requirements, batteries are needed that have not simply an enhanced battery capacity but also high output. The sealed batteries widely used for EVs and HEVs usually are prismatic sealed batteries in which an electrode assembly is housed inside a prismatic outer can made of metal. Because large current flows in such batteries when they perform high-output discharge, they must be rendered low-resistance and their internal resistance must be reduced to the extent possible. Moreover, there must be no variation in the resistance. For these reasons, various improvements have been undertaken concerning the realization of high reliability and low resistance in the terminal unit.

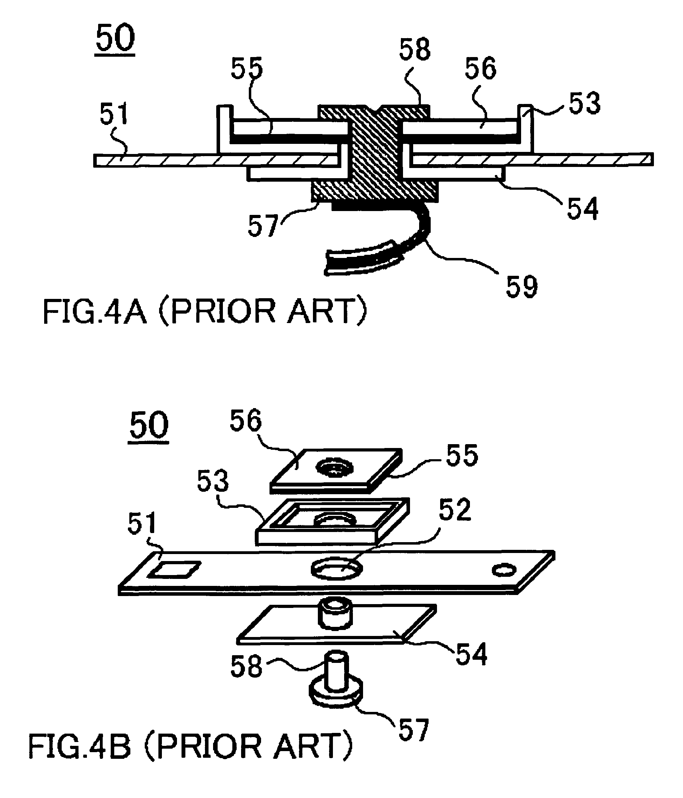

The method of mechanical crimping has long been widely used as a method for realizing high reliability and low resistance in the terminal unit of these batteries. For instance, in a terminal unit 50 of a sealed battery set forth in JP-A-2003-151528, there are disposed, as shown in Figs. 4A and 4B, insulating members 53, 54 that cover the inner surface of a through-hole 52 (see Fig. 4B) provided in a metallic plate 51 that seals the mouth portion of the sealed battery, and both faces of the metallic plate 51 in the areas around the through-hole 52. Fabrication is effected as follows. On one of the surfaces of the insulating members 53, 54 that are positioned on the outside of the battery, an electrode lead-out pin 57 is disposed into contact with the surface of a synthetic resin layer 55 formed on one surface of an electrode extraction plate 56, and is inserted through a through-hole in the electrode extraction plate 56. Then the end portion 58 of the electrode lead-out pin 57 is crimped so as to effect integration, and a lead tab 59 or the like is resistance-welded to the head portion of the electrode lead-out pin 57.

With the terminal unit 50 of the sealed battery set forth in JP-A-2003-151528, the synthetic resin layer 55 is disposed between the electrode extraction plate 56 and the insulating member 53, and thanks to this, a sealed battery can be obtained that has a good airtightness maintenance characteristic between the insulating member 53 and the electrode extraction plate 56, with little change over time and high reliability. However, with the terminal unit 50 of the sealed battery described in JP-A-2003-151528, a crimped portion is present on the outside of the battery, and consequently there exist the issues that the end portion 58 of the electrode lead-out pin 57 is deficient in flatness and that there is large variation in the battery height dimension. In addition, with the end portion 58 of the electrode lead-out pin 57 being deficient in flatness, spattering occurs at the end portion 58 of the electrode lead-out pin 57 when the resistance welding electrode is brought into contact with the end portion 58 of the electrode lead-out pin 57 in order to resistance-weld the lead tab 59 or the like to the electrode lead-out pin 57, and this causes a decline in battery productivity.

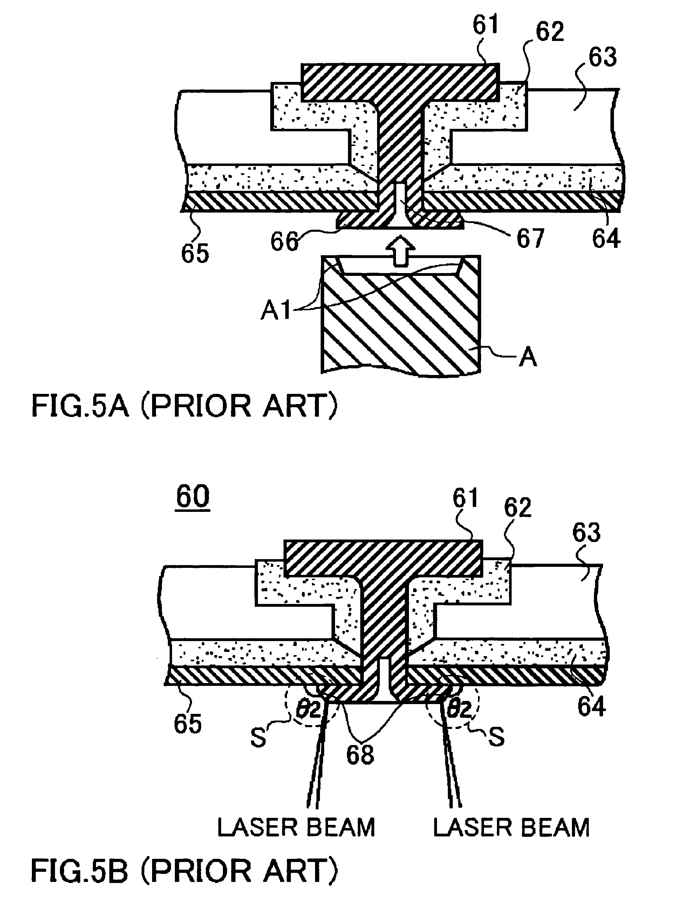

On the other hand, a terminal unit 60 of a sealed battery set forth in JP-A-2008-251411 is fabricated in the following manner, as shown in Figs. 5A and 5B. Prior to crimping (pressure-joining), a terminal 61 is inserted through a sealing plate 63, spacer 64 and collector part 65, in the order given, with a gasket 62 interposed. Then crimping treatment is carried out, in such a manner that, using a particular pressing die, an opening 67 in an end face 66 of the terminal 61 is reamed in the direction parallel with the sealing plate 63. Next, a processing punch (die) A, having a recessed portion complementing the shape of the end face 66 of the crimped terminal 61, and slant portions A1 of a particular angle (e.g., θ2) at the edges of the recessed portion, is brought into contact with and applied to the end face 66 of the crimped terminal 61 (see Fig. 5A), thereby forming circular truncated cone portions 68 on the end face 66 (see Fig. 5B). Following that, the edges of the circular truncated cone portions 68 of the crimped terminal 61 are laser-welded to the collector part 65.

With the terminal unit 60 of the sealed battery set forth in JP-A-2008-251411, the entire bottom surfaces of the circular truncated cone portions 68 in the regions S fit tightly against the collector part 65, and moreover, the boundary regions between the edges of the circular truncated cone portions 68 and the collector part 65 are firmly laser-welded, yielding the advantage that conduction stability between the crimped terminal 61 and the collector part 65 is reliably maintained. However, the terminal unit 60 of the sealed battery set forth in JP-A-2008-251411 requires a huge equipment investment because it is necessary to laser-weld the edges of the circular truncated cone portions 68 of the end face 66 of the crimped terminal 61 to the collector part 65, and this means an increase in the battery cost. Furthermore, unless such laser welding is performed, crimped portions will be present inside the battery, which means that if a severe external force is imposed in the event of the battery being dropped, etc., conduction faults could occur due to electrolyte entering into the conduction locations in the crimped portions (electrolyte inflow), and if so the internal resistance of the battery could change greatly.

As regards terminal units in which no crimped portions are formed, the structures set forth in JP-A-59-41862 and JP-A-7-235289 are known. A terminal unit 70 of a sealed battery disclosed in JP-A-59-41862 has, as Fig. 6 shows, a concave rivet (female rivet) 74 that serves as a terminal unit structural member and is inserted into a through-hole 72 in a synthetic resin sealing plate 71 with a washer 73 interposed, and a convex rivet (male rivet) 76 that is inserted into the concave rivet 74 from the side opposed to the concave rivet 74, with a washer 75 interposed. Note that the outer surface of the washer 73 is electrically connected to an electrode plate of the sealed battery, and that the concave rivet 74 and male rivet 76 constitute what is known as a compression rivet.

Furthermore, a sealed electrode terminal architecture 80 set forth in JP-A-7-235289 has, as Figs. 7A and 7B show, a structure whereby a first electrode pin 81 of a concave rivet shape is disposed at the outer side of a sealing plate 85, a second electrode pin 82 of a convex rivet shape formed of a softer material than the first electrode pin 81 is disposed at the inner side of the sealing plate 85, and by pressing the first and second electrode pins 81 and 82 so as to apply bias thereto, a columnar axle portion 82a of the second electrode pin 82 is made to undergo bulging deformation in the width direction while being compressed in the longitudinal direction, with the result that the first and second electrode pins 81 and 82 are inseparably integrated.

The length of a hollow axle portion 81a of the first electrode pin 81 is identical with that of the columnar axle portion 82a of the second electrode pin 82. This means that, since there is a ring-form groove 82c formed in a brim portion 82b of the second electrode pin 82 so as to encircle the base of the columnar axle portion 82a, when the first and second electrode pins 81 and 82 are given bias by being pressed, the tip of the hollow axle portion 81a of the first electrode pin 81 is placed in a state of contact with the ring-form groove 82c of the second electrode pin 82, and the columnar axle portion 82a of the second electrode pin 82 is made to undergo bulging deformation in the width direction while being compressed in the longitudinal direction. Hence, a casing 84 made of cylindrical synthetic resin and having a hollow part 84a is disposed around the outside of the hollow axle portion 81a of the first electrode pin 81, and insulating sheets 83 in which an opening 83a is formed are disposed between the first electrode pin 81 and the sealing plate 85 and between the second electrode pin 82 and the sealing plate 85, with the result that the first and second electrode pins 81 and 82, in a such a state that they are reliably insulated from the sealing plate 85, airtightly seal up a through-hole 85a in the sealing plate 85.

### SUMMARY

With the terminal unit of the sealed battery set forth in JP-A-59-41862, the use of a compression rivet constituted of a concave rivet and a convex rivet yields the advantages that, without crimping, the sealing plate is pressed outward in the radial direction, a high sealing performance between the sealing plate and the concave and convex rivets is ensured, and a sealed battery with good anti-leakage characteristics can be obtained. With the sealed electrode terminal architecture set forth in JP-A-7-235289, the fact that, due to bias being imparted to the first and second electrode pins by pressing, the second electrode pin undergoes bulging deformation in the width direction while being compressed in the longitudinal direction, in conjunction with the presence of a synthetic resin casing and insulating film between the first and second electrode pins and the sealing plate, gives superior insulation and airtightness performance. In addition, with the terminal unit of the sealed battery set forth in JP-A-59-41862 and the sealed electrode terminal architecture in JP-A-7-235289, the surfaces of the terminals are flat on both the inside and the outside of the battery, which yields the advantages that spattering is unlikely to occur, and workability is good, during resistance welding of the terminals and lead tabs or the like in the battery interior.

However, the terminal unit of the sealed battery set forth in JP-A-59-41862 has a structure such that electrical conduction between the washer and the concave rivet is effected by spot-welding an electrical lead body to the washer, and the crimping points between the concave rivet and the washer are located inside the battery, which means that if a severe external force is imposed in the event of the battery being dropped, etc., conduction faults could occur due to electrolyte entering the crimping points between the concave rivet and the washer, and if so the internal resistance of the battery could change greatly. With the sealed electrode terminal architecture set forth in JP-A-7-235289, the crimping points between the first and second electrode pins are located inside the battery, which means that, similarly to the case of the terminal unit of the sealed battery set forth in JP-A-59-41862, if a severe external force is imposed in the event of the battery being dropped, etc., conduction faults could occur due to electrolyte entering the crimping points between the first and second electrode pins, and if so the internal resistance of the battery could change greatly.

An advantage of some aspects of the present invention is to provide a terminal for a sealed battery including an outer terminal of a solid flat rivet shape and an inner terminal of a hollow flat rivet shape, with the crimping points between the two terminals being located on the outside of the battery, so that there is little variation in the battery height dimension, and there is little change in the internal resistance of the battery even if a severe external force is imposed on it, and moreover the cost is low, and the battery reliability is enhanced; and to provide a manufacturing method for such terminal.

According to an aspect of the invention, a terminal for a sealed battery is electrically connected to a collector of an electrode assembly by being installed inside an opening that is bored in a sealing plate, the sealing plate being fixed in a sealed state to the mouth portion of an outer can that has the electrode assembly inside. The terminal includes: an outer terminal, of a solid flat rivet shape, that has a brim portion and a columnar axle portion between which a curved surface is formed; and an inner terminal, of a hollow flat rivet shape, that has a brim portion and a hollow axle portion. The hollow axle portion of the inner terminal is inserted, from inside the outer can, through an opening in a first insulating member, the opening bored in the sealing plate, and an opening formed in a second insulating member, in the order given, in such a state as to be insulated from the sealing plate. The columnar axle portion of the outer terminal is inserted, from outside the outer can, into the hollow axle portion of the inner terminal and crimped thereto, so that a radially bulge-deformed portion is formed in an intermediate portion of the columnar axle portion. The hollow axle portion of the inner terminal deforms into a shape that matches the radially bulge-deformed portion of the columnar axle portion of the outer terminal, and is crimped to the columnar axle portion of the outer terminal; and a tip of the hollow axle portion is curling-formed to match the curved surface between the brim portion and the columnar axle portion of the outer terminal.

With the terminal for a sealed battery of such aspect of the invention, the columnar axle portion of the outer terminal is inserted, from outside the outer can, into the hollow axle portion of the inner terminal, and crimped thereto, so that a radially bulge-deformed portion is formed in the intermediate portion of the columnar axle portion. The hollow axle portion of the inner terminal deforms into a shape that matches the radially bulge-deformed portion of the columnar axle portion of the outer terminal, and is crimped to the columnar axle portion of the outer terminal. Consequently, with such terminal for a sealed battery of the present aspect, due to the radial bulge deformation of the columnar axle portion of the outer terminal, the first or the second insulating member is pressed into the opening bored in the sealing plate, so that the airtightness of the terminal unit is good and leakage is unlikely to occur.

With such terminal for a sealed battery of the present aspect, because the outer terminal takes the form of a solid flat rivet that has a brim portion and a columnar axle portion, and the inner terminal takes the form of a hollow flat rivet that has a brim portion and a hollow axle portion, the outside surface of the outer terminal is flat, and moreover will not undergo warping deformation. For this reason, with such terminal for a sealed battery of the present aspect, besides variation in the height dimension of the outer terminal decreasing, there will be little risk of spatter occurring at the outer terminal when an electrode tab is spot-welded to the brim portion of the inner terminal by bringing a resistance welding electrode into contact with the brim portion surface of the outer terminal and bringing an electrode tab and a resistance welding electrode into contact with the brim portion surface of the inner terminal. Thanks to this, the productivity of the sealed batteries will be improved.

With such terminal for a sealed battery of the present aspect, the hollow axle portion of the inner terminal is deformed into a shape that matches the radially bulge-deformed portion of the columnar axle portion of the outer terminal and is crimped to the columnar axle portion of the outer terminal, and moreover, its tip is curling-processed to match the curved surface between the brim portion and the columnar axle portion of the outer terminal. Consequently, with such terminal for a sealed battery of the present aspect, the crimping points between the outer terminal and inner terminal are located on the outside of the sealed battery, so that even if a large external force is imposed from the exterior, such as the impact of being dropped, electrolyte will not enter between the outer and inner terminals. In addition, because the tip of the hollow axle portion of the inner terminal is curling-formed to match the curved surface between the brim portion and the columnar axle portion of the outer terminal, the airtightness between the outer terminal and the tip of the hollow axle portion of the inner terminal is exceedingly good, and air or moisture is unlikely to enter the battery interior from the exterior. Thus, a sealed battery that has a high-quality terminal unit can be obtained.

In the terminal for a sealed battery of the present aspect, it is preferable that a protrusion be formed all along the inner terminal-side surface of the brim portion of the outer terminal, that this ring-form protrusion contact with the outer surface of the second insulating member, and that the curling-formed tip of the hollow axle portion of the inner terminal be positioned inside the space formed between the ring-form protrusion, the columnar axle portion, and the outer surface of the second insulating member.

With a protrusion being formed all along the inner terminal-side surface of the brim portion of the outer terminal, and this ring-form protrusion contacting with the outer surface of the second insulating member, and the curling-formed tip of the hollow axle portion of the inner terminal being positioned inside the space formed between the ring-form protrusion, the columnar axle portion, and the outer surface of the second insulating member, the curling-formed tip of the hollow axle portion of the inner terminal is distanced from the exterior space. As a result, with such terminal for a sealed battery of the present aspect, the airtightness between the outer terminal and the tip of the hollow axle portion of the inner terminal, and between the tip of the hollow axle portion of the inner terminal and the second insulating member is exceedingly better, and air or moisture is unlikely to enter the battery interior from the exterior. Thus, a sealed battery that has an exceedingly high-quality terminal unit can be obtained.

In the terminal for a sealed battery of the present aspect, it is preferable that a protrusion be formed either all around, or along a part of, the outer circumference surface of the second insulating member, so as to encircle the outer circumference of the brim portion of the outer terminal.

With a protrusion being formed either all around, or along a part of, the outer circumference surface of the second insulating member, so as to encircle the outer circumference of the brim portion of the outer terminal, the insulation performance between the outer circumference of the brim portion and the sealing plate is, thanks to the second insulating member, good even if the outer terminal rotates. Thus, a sealed battery that has an even higher-reliability terminal unit can be obtained.

In the terminal for a sealed battery of the present aspect, it is preferable that protrusions be formed all around the areas surrounding the opening on both faces of the sealing plate.

With protrusions being formed all around the areas surrounding the opening on both faces of the sealing plate, one of the protrusions bites into the first insulating member and the other into the second insulating member when the outer and inner terminals are crimped, so that the airtightness between the sealing plate and the first and second insulating members will be good. Thus, a sealed battery that has an even higher-quality terminal unit can be obtained.

It is preferable that the protrusion, provided to the sealing plate, formed on the outer terminal-side surface be opposed to the ring-form protrusion, with the second insulating member interposed, and that the protrusion, provided to the sealing plate, formed on the inner terminal-side surface be opposed to the brim portion of the inner terminal, with the first insulating member interposed.

With such a structure, one of the protrusions bites effectively into the first insulating member, and the other into the second insulating member, in the longitudinal direction, when the inner and outer terminals are crimped, so that the airtightness between the sealing plate and the first and second insulating members will be even better. Thus, a sealed battery that has a high-quality terminal unit can be obtained.

According to another aspect of the invention, a method for forming a terminal unit for a sealed battery, the terminal being electrically connected to a collector of an electrode assembly by being installed inside an opening that is bored in a sealing plate, the sealing plate being fixed in a sealed state to the mouth portion of an outer can that has the electrode assembly inside, includes: preparing as the terminal an outer terminal, of a solid flat rivet shape, that has a brim portion and a columnar axle portion between which a curved surface is formed, and an inner terminal, of a hollow flat rivet shape, that has a brim portion and a hollow axle portion that is longer than the columnar axle portion of the outer terminal; inserting the hollow axle portion of the inner terminal, from inside the outer can, through an opening in a first insulating member, the opening bored in the sealing plate, and an opening formed in a second insulating member, in the order given, in such a state as to be insulated from the sealing plate; inserting the columnar axle portion of the outer terminal, from outside the outer can, into the hollow axle portion of the inner terminal; applying pressing force between the brim portion of the outer terminal and the brim portion of the inner terminal and crimping the columnar axle portion of the outer terminal into the hollow axle portion of the inner terminal; curling-processing a tip of the hollow axle portion of the inner terminal to match the curved surface between the brim portion and the columnar axle portion of the outer terminal; and further applying pressing force between the brim portion of the outer terminal and the brim portion of the inner terminal and forming a radially bulge-deformed portion in the columnar axle portion of the outer terminal.

With the forming method of such aspect of the invention, a terminal unit for a sealed battery that yields the foregoing advantages can be formed with ease.

### BRIEF DESCRIPTION OF THE DRAWINGS

The invention will be described with reference to the accompanying drawings, wherein the same numbers refer to the same elements throughout.
Fig. 1 is a partially cross-sectional perspective view of a nonaqueous electrolyte secondary battery, showing the structure that is common to an embodiment of the invention and comparative examples.
Figs. 2A to 2H are perspective views that explicate, in sequence, the manufacturing processes for the nonaqueous electrolyte secondary battery in Fig. 1.
Figs. 3A to 3D are views that illustrate the manufacturing processes for the negative electrode terminal of the embodiment and correspond to a cross section along line III-III in the proximity of the negative electrode terminal 18 shown in Fig. 1, Fig. 3A being an exploded cross-sectional view of component parts, Fig. 3B being a cross-sectional view of the assembled state, Fig. 3C being a cross-sectional view showing the state after the inner terminal curling process, and Fig. 3D being a cross-sectional view of the completed terminal.
Fig. 4A is a perspective view that shows the structure of a terminal unit for a sealed battery in a first conventional example, and Fig. 4B is an exploded perspective view of the same terminal unit.
Fig. 5A is a cross-sectional view that illustrates the process of forming a crimped terminal of a sealed battery in a second conventional example, and Fig. 5B is a cross-sectional view that illustrates the succeeding process of laser-welding such terminal.

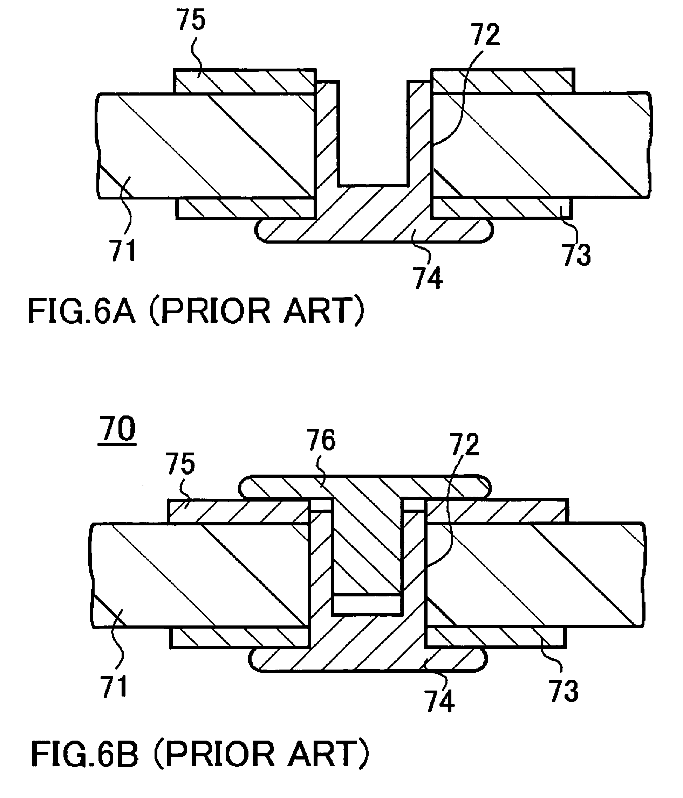

Fig. 6A is a cross-sectional view that shows, during manufacture, a terminal unit for a sealed battery in a third conventional example, and Fig. 6B is a cross-sectional view of the same terminal unit after completion.

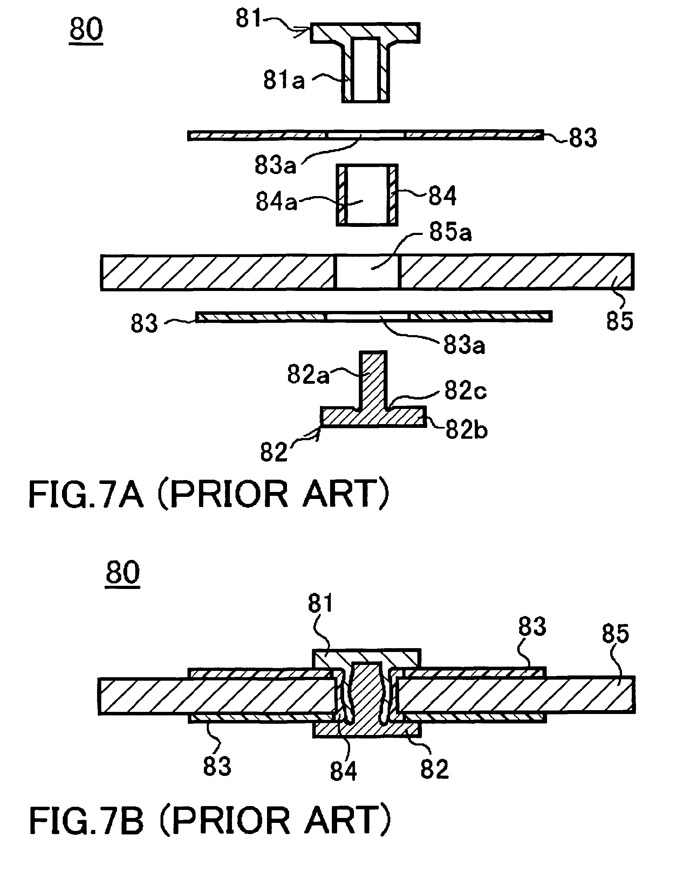

Fig. 7A is an exploded cross-sectional view of a sealed electrode terminal architecture in a fourth conventional example, and Fig. 7B is a cross-sectional view of the same architecture after completion.

### DESCRIPTION OF EXEMPLARY EMBODIMENTS

An embodiment of the invention will now be described with reference to the accompanying drawings. However, it should be understood that the embodiment set forth below, which concerns a compact prismatic nonaqueous electrolyte secondary battery including a terminal for a sealed battery, is intended by way of an example for realizing the technical concepts of the invention, and not by way of limiting the invention to this particular prismatic nonaqueous electrolyte secondary battery. The invention can equally well be applied to nickel-hydrogen secondary batteries and other sealed batteries, or to large-size sealed batteries for HEVs, EVs, and other applications. In addition, although for reasons to do with the structure of a sealed battery, a negative electrode terminal is described below as an example of terminals for a sealed battery according to the invention, the invention applies also to positive electrode terminals in the same way, as well as to negative electrode terminals.

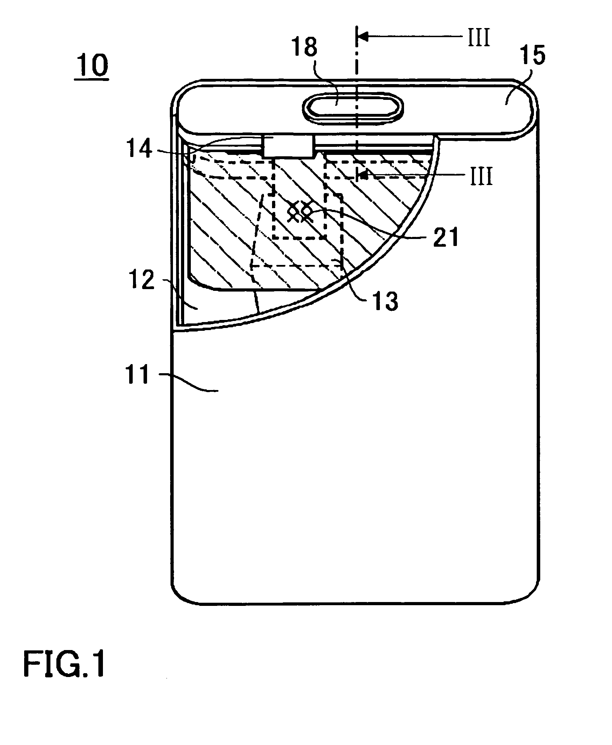

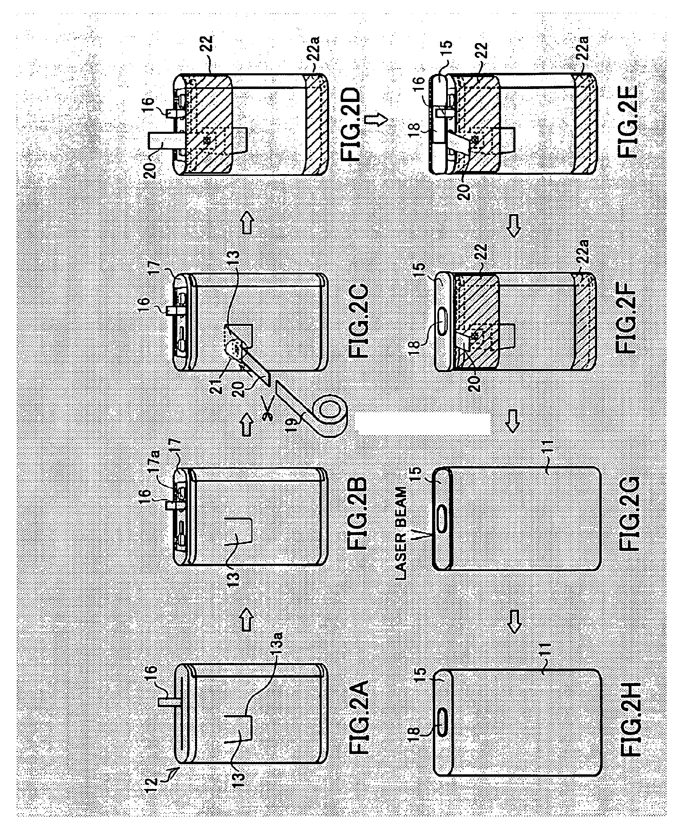

First of all, the structure of a prismatic nonaqueous electrolyte secondary battery that is common to the embodiment and to comparative examples will be described in outline with reference to Figs. 1 and 2A to 2H. Note that Fig. 1 is a partially cross-sectional perspective view of a nonaqueous electrolyte secondary battery, showing the structure that is common to the embodiment and the comparative examples, and Figs. 2A to 2H are perspective views that explicate, in sequence, the manufacturing processes for the nonaqueous electrolyte secondary battery in Fig. 1.

This prismatic nonaqueous electrolyte secondary battery 10 includes: a box-shaped battery outer can 11 that is open at one lengthwise end, has a closed outer surface, is almost flat, and is electrically conductive; a flat wound electrode assembly 12 that is inserted into the battery outer can 11; a positive electrode collector tab 14 that is electrically connected by, for example, welding or the like method to a cut-out piece 13 cut out from the positive electrode substrate exposed portion of the flat wound electrode assembly 12 and that is of higher strength than the positive electrode substrate; and a sealing plate 15 that covers and seals the mouth portion of the battery outer can 11. The mouth portion of the battery outer can 11 is sealed by laser-welding the sealing plate 15 thereto with the positive electrode collector tab 14 sandwiched between the mouth edge of the battery outer can 11 and the sealing plate 15.

With the prismatic nonaqueous electrolyte secondary battery 10 of the foregoing structure, when the sealing plate 15 is laser-welded to the mouth edge of the battery outer can 11, the positive electrode collector tab 14 too is welded to the outer can 11, whereby electrical connection is effected between the positive electrode collector tab 14 and the battery outer can 11. Moreover, because the positive electrode collector tab 14 is formed from a strip of foil of higher strength than the substrate of one of the electrodes, the mechanical strength is improved over the case where the positive electrode collector tab 14 is formed from the cut-out piece 13.

Next, a manufacturing method for the prismatic nonaqueous electrolyte secondary battery 10 that is common to the embodiment and to the comparative examples will be described with reference to Figs. 2A to 2H. The flat wound electrode assembly 12 is composed of a positive electrode, a negative electrode, and a separator that is interposed between the two electrodes. The methods for manufacturing these electrode plates are already publicly known, and the invention can use any desired publicly known flat wound electrode assembly 12. Examples of such manufacturing methods are described below.

### Fabrication of positive electrode plate

For the positive electrode active material, lithium cobalt oxide, acetylene black, which is a carbon-based conductive agent, and PVDF (polyvinylidene fluoride) are mixed in the proportion 95 : 2.5 : 2.5 by mass, and NMP (n-methylpyrrolidone) as solvent is mixed in using a mixer, to produce a positive electrode mixture slurry. This slurry is then spread over both faces of a 15-µm-thick positive electrode substrate of aluminum, via the doctor blade method, and allowed to dry, thus forming a positive electrode active material layer on both sides of the positive electrode substrate. After that, the resulting item is rolled with compression rollers to complete a positive electrode plate.

In this positive electrode, extending a particular distance from the winding end edge of the positive electrode substrate there is provided, on both faces of the positive electrode substrate, a both-face exposed portion where the positive electrode active material layer is absent, and extending for a particular distance beyond such both-face exposed portion there is provided a single-face exposed portion where only one face of the positive electrode substrate has the positive electrode active material layer and the other face of the substrate is exposed. In addition, in the both-face exposed portion of the positive electrode substrate, there is formed a substantially cornered "U" incision 13a pierced in the positive electrode substrate, as shown in Fig. 2A. This incision 13a is for forming the cut-out piece 13 for connecting the positive electrode collector tab 14, and is formed by cutting into the positive electrode substrate with a sharp cutting tool.

### Fabrication of negative electrode plate

Artificial graphite, a solution of 1% by mass of CMC in pure water, and SBR are kneaded in the proportion of 98 : 1 : 1 by mass of the solid contents, to produce a negative electrode mixture slurry. This slurry is then spread over both faces of an 8-µm-thick negative electrode substrate of copper, via the doctor blade method, and allowed to dry, thus forming an active material layer on both sides of the negative electrode substrate. After that, the resulting item is rolled with compression rollers to complete a negative electrode plate. Then a negative electrode collector tab 16 of nickel is installed by welding to the exposed portion of the negative electrode substrate.

### Fabrication of flat wound electrode assembly

The positive electrode plate and negative electrode plate fabricated as described above are wound together, in such a manner that the positive electrode is on the outside, and with a separator constituted of a polyethylene microporous membrane sandwiched between them so that they are insulated from each other, and the resulting item is crushed to produce the flat wound electrode assembly 12. Note that the negative electrode collector tab 16 is made to protrude from the top of the flat wound electrode assembly 12. Fig. 2A shows the approximate structure of the flat wound electrode assembly 12.

### Preparation of nonaqueous electrolyte

The nonaqueous electrolyte used herein is a solution of LiPF₆ dissolved to a concentration of 1 mol/L in a solvent mixture of ethylene carbonate, ethylmethyl carbonate and diethyl carbonate mixed in the proportion 40 : 30 : 30 by volume.

An insulating spacer 17 made of resin material is provided to the top of the flat wound electrode assembly 12 fabricated as described above as shown in Fig. 2B. The negative electrode collector tab 16 is inserted through one slit 17a in this spacer. Subsequently, the cut-out piece 13 is cut and raised from the incision 13a of the positive electrode substrate by approximately 90 degrees as shown in Fig. 2C. The cut-out piece 13 is then ultrasonic-welded using aluminum foil 19 of a particular thickness. After electric conductivity is secured, the resulting item is cut to a particular length with a cutting tool to produce a positive electrode collector tab 20.

The positive electrode collector tab 20 welded to the cut-out piece 13 is further raised by approximately 90 degrees as shown in Fig. 2D. An insulating tape 22 is placed so as to cover the cut-out piece 13 and an ultrasonic-welded portion 21 to fix them on the flat wound electrode assembly 12. Another insulating tape 22a may be placed on the bottom side of the flat wound electrode assembly 12 as necessary.

Subsequently, with the sealing plate 15 placed above the flat wound electrode assembly 12, the inner side of a negative electrode terminal 18 fixed to the sealing plate 15 and the negative electrode collector tab 16 are electrically connected by resistance welding as shown in Fig. 2E. A part of the tip of the positive electrode collector tab 20 is made to protrude outside with the sealing plate 15 brought into close contact with the flat wound electrode assembly 12 as shown in Fig. 2F. The detailed structure of the negative electrode terminal 18 will be described later.

The flat wound electrode assembly 12 to which the negative electrode collector tab 16 is electrically connected is then inserted into the battery outer can 11 as shown in Fig. 2G. After that, the positive electrode collector tab 20 led out from the positive electrode is extended to the mouth edge along the inner wall of the battery outer can 11, and the sealing plate 15 is fit to the mouth edge of the battery outer can 11 with the end of the positive electrode collector tab 20 sandwiched between the outer circumference surface of the sealing plate 15 and the mouth edge of the battery outer can 11. With a particular external pressure applied on the mouth edge of the battery outer can 11, the fitting portions of the battery outer can 11 and the sealing plate 15 are irradiated with a laser beam to weld the portions. Through this laser welding, the mouth portion of the battery outer can 11 is sealed up, and at the same time, the positive electrode collector tab 20 is electrically connected to the battery outer can 11.

After the laser welding, nonaqueous electrolyte is poured in the battery outer can 11 through a pour hole (not shown) in the sealing plate 15, and the pour hole is sealed up with a cap (not shown) as shown in Fig. 2H. In this manner, the nonaqueous electrolyte secondary battery 10, which is a sealed battery common to the embodiment and to comparative examples, is completed. The nonaqueous electrolyte secondary battery 10 fabricated as described above is 5.5 mm thick, 34 mm wide and 50 mm high, and its rated capacity is 1150 mAh.

### Negative electrode terminal according to embodiment

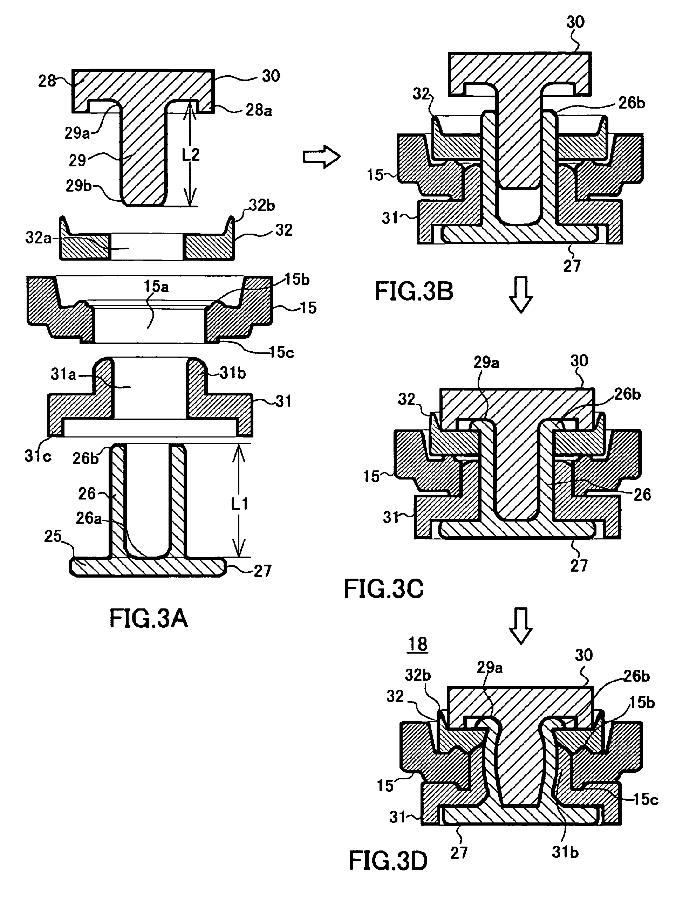

The negative electrode terminal 18 according to the embodiment will be described with reference to Figs. 3A to 3D. Figs. 3A to 3D are views that illustrate the manufacturing processes for the negative electrode terminal of the embodiment, showing a cross section along line III-III in Fig. 1, Fig. 3A being an exploded cross-sectional view of component parts, Fig. 3B being a cross-sectional view of the assembled state, Fig. 3C being a cross-sectional view showing the state after the inner terminal curling process, and Fig. 3D being a cross-sectional view of the completed terminal.

The negative electrode terminal 18 according to the embodiment includes, as shown in Fig. 3A, an inner terminal 27, of a hollow flat rivet shape, that has a brim portion 25 and a hollow axle portion 26; an outer terminal 30, of a solid flat rivet shape, that has a brim portion 28 and a columnar axle portion 29; a first insulating member 31 made of resin material; a second insulating member 32 made of resin material; and the sealing plate 15 in which an opening 15a is bored. A curved surface 29a is formed between the brim portion 28 and the columnar axle portion 29 of the outer terminal 30. A protrusion 28a is formed all along the inner terminal-side surface of the brim portion 28 of the outer terminal 30. A tip 29b of the columnar axle portion 29 is rounded, complementing the shape of a bottom 26a of the hollow axle portion 26 of the inner terminal 27, which will be described later. The length L1 extending from the bottom 26a of the hollow axle portion 26 of the inner terminal 27 to a tip 26b thereof is larger than the length L2 extending from the root of the columnar axle portion 29 of the outer terminal 30 to the tip 29b thereof, that is, L1 > L2.

The first insulating member 31 includes on its upper side a ring-form portion 31b having a through hole 31a whose diameter is substantially as large as the outer diameter of the hollow axle portion 26 of the inner terminal 27, and on its lower side periphery a protrusion 31c that is large enough to encircle the outer circumference of the brim portion 25 of the inner terminal 27. The word "substantially" herein preferably means, but not necessarily limited to "almost the same", and can cover both slightly larger and smaller ranges (the same applies hereinafter). The ring-form portion 31b of the first insulating member 31 has a height substantially as large as the thickness of the sealing plate 15 and an outer diameter substantially as large as the inner diameter of the opening 15a of the sealing plate 15. The height of the protrusion 31c defines the position of the brim portion 25 of the inner terminal 27 and may be small.

The second insulating member 32 has at its center an opening 32a whose diameter is substantially as large as the outer diameter of the hollow axle portion 26 of the inner terminal 27, and on its upper side periphery a protrusion 32b that is large enough to encircle the outer circumference of the brim portion 28 of the outer terminal 30. The height of the protrusion 32b is necessary for ensuring insulation between the brim portion 28 of the outer terminal 30 and the sealing plate, and is preferably equal to the thickness of the brim portion 28 or more. The first insulating member 31 and the second insulating member 32 may have shapes opposite to each other as the ones described above.

The sealing plate 15 has the opening 15a bored through the area where the negative electrode terminal 18 is formed. A protrusion 15b is formed on the outer terminal 30 side all along the areas surrounding this opening 15a, and another protrusion 15c is formed on the inner terminal 27 side all along the areas surrounding the opening 15a. The functions of the protrusions 15b and 15c will be described later. The opening 15a is formed in the sealing plate 15 that has deformed toward the inside of the battery in this example in order to lower the height of the outer terminal 30 of the battery.

### Assembly process of component parts

Assembly of the inner terminal 27, the first insulating member 31, the second insulating member 32 and the outer terminal 30 into the opening 15a of the sealing plate 15 is performed as follows. First, as shown in Fig. 3B, the ring-form portion 31b of the first insulating member 31 is inserted from the lower side (on the inner side of the battery) into the opening 15a of the sealing plate 15, and then the hollow axle portion 26 of the inner terminal 27 is inserted from the lower side into the through hole 31a of the first insulating member 31. After that, the second insulating member 32 is placed above the sealing plate 15 (on the outer side of the battery) such that the protrusion 32b faces outward, and then the columnar axle portion 29 of the outer terminal 30 is inserted into the hollow axle portion 26 of the inner terminal 27 in the downward direction.

The inner diameter of the hollow axle portion 26 of the inner terminal 27 is substantially as large as the outer diameter of the columnar axle portion 29 of the outer terminal 30. Moreover, the outer diameter of the hollow axle portion 26 of the inner terminal 27 is substantially as large as the inner diameter of the ring-form portion 31b of the first insulating member 31 and the inner diameter of the opening 32a of the second insulating member 32, and the outer diameter of ring-form portion 31b of the first insulating member 31 is substantially as large as the inner diameter of the opening 15a of the sealing plate 15. With this structure, the inner terminal 27, the first insulating member 31, the sealing plate 15, the second insulating member 32 and the outer terminal 30 are fixed in a manner shown in Fig. 3B with their friction force.

### Inner terminal curling process

The columnar axle portion 29 of the outer terminal 30 is crimped into the hollow axle portion 26 of the inner terminal 27 by punching, for example, from above the outer terminal 30. The length L1 extending from the bottom 26a of the hollow axle portion 26 of the inner terminal 27 to the tip 26b thereof is larger than the length L2 extending from the root of the columnar axle portion 29 of the outer terminal 30 to the tip 29b thereof, that is, L1 > L2. As a result, the diameter of the tip 26b of the hollow axle portion 26 of the inner terminal 27 is expanded along the curved surface 29a formed on the brim portion 28 side of the columnar axle portion 29 of the outer terminal 30 and rounded as shown in Fig. 3C (hereinafter referred to as "curling"), whereby the tip 26b of the hollow axle portion 26 of the inner terminal 27 comes into contact with the outer surface of the second insulating member 32, and moreover, the tip 29b of the columnar axle portion 29 of the outer terminal 30 comes into contact with the bottom 26a of the hollow axle portion 26 of the inner terminal 27.

### Outer terminal bulging process

As the columnar axle portion 29 of the outer terminal 30 is crimped into the hollow axle portion 26 of the inner terminal 27, an intermediate portion of the columnar axle portion 29 of the outer terminal 30 bulges as shown in Fig. 3D and thus the diameter of the columnar axle portion 29 increases, resulting in an increase in the outer diameter of the hollow axle portion 26 of the inner terminal 27. As a result, the ring-form portion 31b of the first insulating member is pressed against the inner wall of the opening 15a of the sealing plate 15, whereby the inner terminal 27 and the first insulating member 31 are firmly fixed in the opening 15a of the sealing plate 15 in an airtight manner. Moreover, the ring-form protrusion 15c facing downward of the sealing plate 15 bites into the upper surface of the first insulating member 31, while the ring-form protrusion 15b facing upward bites into the lower surface of the second insulating member 32. With this structure, airtightness between the sealing plate 15 and the first insulating member 31 and between the sealing plate 15 and the second insulating member 32 is completely secured.

Furthermore, the airtightness between the outer terminal 30 and the tip 26b of the hollow axle portion 26 of the inner terminal 27 is extremely good because the tip 26b of the hollow axle portion 26 of the inner terminal 27 is curling-formed along the curved surface 29a between the brim portion 28 and the columnar axle portion 29 of the outer terminal 30, and air or moisture is unlikely to enter the battery interior from the exterior. Furthermore, the protrusion 28a formed all along the inner surface of the brim portion 28 of the outer terminal 30 is brought into contact with the surface of the second insulating member 32, thereby forming a sealed space defined by the protrusion 28a and the columnar axle portion 29 of the outer terminal 30 and the outer surface of the second insulating member 32. The curling-processed tip 26b of the hollow axle portion 26 of the inner terminal 27 is located in this sealed space, and therefore, the airtightness between the outer terminal 30 and the tip 26b of the hollow axle portion 26 of the inner terminal 27 is further enhanced.

Moreover, the negative electrode terminal 18 fabricated as described above will undergo spot welding with one of the resistance welding electrodes brought into contact with the surface of the outer terminal 30 and the other of the resistance welding electrodes brought into contact with the surface of the negative electrode collector tab 16 (see Fig. 2E) in contact with the surface of the inner terminal 27. In this process, spattering is unlikely to occur on the outer terminal 30 side because there is no step on the surface of the outer terminal 30, whereby efficiency in the welding process can be improved.

### Drop durability evaluation

To verify the advantages of the nonaqueous electrolyte secondary battery according to the embodiment, a drop test was conducted as described below by measuring changes in internal resistance and battery dimension and evaluating the drop durability of the battery. Note that test batteries corresponding to the invention were prepared such that the crimping state between the outer and inner terminals was reduced by 50% from the normal resin compressibility (i.e., the state of loose crimping) because the battery according to the embodiment is excessively efficient such that it cannot be substantially impacted even when being dropped. The nonaqueous electrolyte secondary battery of Comparative Example 1 has a similar terminal structure to the conventional structure shown in Figs. 4A and 4B. The nonaqueous electrolyte secondary battery of Comparative Example 2 has a similar terminal structure to the conventional structure shown in Figs. 5A and 5B, except that laser welding is not carried out.

### Measurement of change in internal resistance:

The internal resistance of all the test batteries was measured before and after the drop test by the alternating current method and the change in the internal resistance was monitored. The test results are listed in Table 1.
Test conditions: The batteries in the state of discharge were dropped from a height of 1.65 m onto a concrete floor. Drops on a total of six planes in the X, Y and Z axes were counted as one cycle and the drop test was repeated 30 cycles for each battery.
Test batteries: The batteries were all 5.5 mm thick, 34 mm wide and 50 mm high, and had a rated capacity of 1150 mAh.
Number of test samples: Ten samples each were tested in order to compare the test batteries corresponding to the invention with Comparative Examples 1 and 2.

### Measurement of battery height:

For all the test batteries before and after the drop test, the height from the bottom of the outer can to the top surface of the outer terminal was measured and the change in the battery height was monitored. The test results are listed in Table 1. The test conditions were the same as those in the measurement of change in the internal resistance mentioned above, except that 30 test samples each were tested to compare the test batteries corresponding to the invention with Comparative Examples 1 and 2.

**Table 1**

| | Test batteries corresponding to invention | Comparative Example 1 | Comparative Example 2 |
|---|---|---|---|
| Drop durability (change in internal resistance) | Average: 3.4 mΩ | Average: 17.7 mΩ | Average: 91.7 mΩ |
| | (-0.2 to 6.9 mΩ) | (4.2 to 34.5 mΩ) | (39.4 to 181.2 mΩ) |
| | σ = 2.12 | σ = 12.66 | σ = 47.71 |
| Battery height (change in dimension) | Average: 49.20 mm | Average: 49.50 mm | Average: 49.19 mm |
| | (49.18 to 49.22 mm) | (49.47 to 49.54 mm) | (49.17 to 49.21 mm) |
| | σ = 0.010 | σ = 0.023 | σ = 0.009 |

As can be seen in the results listed in Table 1, the test batteries corresponding to the invention have a far smaller average of change in the internal resistance than the batteries of Comparative Examples 1 and 2, and also has a smaller variation in change in the internal resistance. This means that, with the test batteries corresponding to the invention, there will be no loosening between the outer and inner terminals even if an excessive external force is imposed, such as the impact of being dropped, and moreover, inflow of electrolyte will remain small. In addition, with the test batteries corresponding to the invention, the variation in the battery height is far better than the battery of Comparative Example 1 and substantially the same as the battery of Comparative Example 2.

The test batteries corresponding to the invention were measured under the state that the crimping state between the outer and inner terminals was reduced by 50% from the normal resin compressibility. Accordingly, the invention provides a nonaqueous electrolyte secondary battery having a terminal unit with high drop durability and representing a small variation in the height dimension. Furthermore, the present invention requires no costly process, like laser welding, in the formation of the terminal unit, thereby realizing economical manufacture.

While no protrusion is formed on the brim portion of the inner terminal to face the outer terminal in the foregoing embodiment, it is clearly understood that such protrusion facing the outer terminal can be provided to the brim portion of the inner terminal in consideration of the advantage made available by the protrusion formed on the brim portion of the outer terminal. When a protrusion is formed on the brim portion of the outer or inner terminal, it is preferable that such protrusion be formed on the outer circumference side of the brim portion for easy manufacture.

While the foregoing embodiment uses a prismatic outer can as an example, the shape of the outer can is not particularly limited, and a cylindrical outer can is also applicable. However, in terms of space efficiency of equipment in which the battery is incorporated, the use of a prismatic outer can is preferable. While the foregoing embodiment uses a flat wound electrode assembly as an example, it is clearly understood that other forms of electrode assemblies are also applicable such as the one in which flat positive and negative electrode plates are stacked with a separator interposed therebetween. Furthermore, while the foregoing embodiment uses a nonaqueous electrolyte secondary battery, aqueous electrolyte secondary batteries such as nickel-hydrogen secondary batteries are equally applicable.

## Claims

1. A sealed battery (10) comprising:
an outer can (11) having mouth portion;
an electrode assembly (12) having a collector and housed inside the outer can;
a sealing plate (15) fixed in a sealed state to the mouth portion of the outer can and having an opening (15a) bored therethrough;
a terminal installed inside the opening of the sealing plate and electrically connected to the collector;
the terminal including:
an outer terminal (30), of a solid flat rivet shape, that has a brim portion (28) and a columnar axle portion (29) between which a curved surface (29a) is formed; and
an inner terminal (27), of a hollow flat rivet shape, that has a brim portion (25) and a hollow axle portion (26),
a first insulating member (31) having an opening (31a), and
a second insulating member (32) having an opening (32a),
the hollow axle portion of the inner terminal being inserted, from inside the outer can, through the opening of the first insulating member, the opening bored in the sealing plate, and the opening of the second insulating member, in the order given, in such a state as to be insulated from the sealing plate,
the columnar axle portion of the outer terminal being inserted, from outside the outer can, into the hollow axle portion of the inner terminal and crimped thereto, so that a radially bulge-deformed portion is formed in an intermediate portion of the columnar axle portion, and
the hollow axle portion of the inner terminal deforming into a shape that matches the radially bulge-deformed portion of the columnar axle portion of the outer terminal, and being crimped to the columnar axle portion of the outer terminal; and a tip of the hollow axle portion being curling-formed to match the curved surface between the brim portion and the columnar axle portion of the outer terminal.

2. The sealed battery according to claim 1, wherein the outer terminal is provided all along the inner terminal-side surface of the brim portion thereof with a ring-form protrusion (28a), the protrusion contacting with the outer surface of the second insulating member, and the curling-formed tip of the hollow axle portion of the inner terminal is positioned inside the space formed between the ring-form protrusion, the columnar axle portion, and the outer surface of the second insulating member.

3. The sealed battery according to claim 1 or 2, wherein the second insulating member is provided either all around, or along a part of, the outer circumference surface thereof with a protrusion (31c), so as to encircle the outer circumference of the brim portion of the outer terminal.

4. The sealed battery according to any one of claims 1 to 3, wherein the sealing plate is provided all around the areas surrounding the opening on both faces thereof with protrusions (15b)(15c).

5. The sealed battery according to claim 4, wherein the protrusion (15b), provided to the sealing plate, formed on the outer terminal-side surface is opposed to the ring-form protrusion, with the second insulating member interposed.

6. The sealed battery according to claim 4 or 5, wherein the protrusion (15c), provided to the sealing plate, formed on the inner terminal-side surface is opposed to the brim portion of the inner terminal, with the first insulating member interposed.

7. A method for forming a terminal unit for a sealed battery (10), the battery including an outer can (11) having mouth portion, an electrode assembly (12) having a collector and housed inside the outer can, a sealing plate (15) fixed in a sealed state to the mouth portion of the outer can and having an opening (15a) bored therethrough, a terminal installed inside the opening of the sealing plate and electrically connected to the collector, the method comprising:
preparing as the terminal an outer terminal (30), of a solid flat rivet shape, that has a brim portion (28) and a columnar axle portion (29) between which a curved surface (29a) is formed, an inner terminal (27), of a hollow flat rivet shape, that has a brim portion (25) and a hollow axle portion (26) that is longer than the columnar axle portion of the outer terminal, a first insulating member (31) having an opening (31a), and a second insulating member (32) having an opening (32a);
inserting the hollow axle portion of the inner terminal, from inside the outer can, through the opening of the first insulating member, the opening bored in the sealing plate, and the opening of the second insulating member, in the order given, in such a state as to be insulated from the sealing plate;
inserting the columnar axle portion of the outer terminal, from outside the outer can, into the hollow axle portion of the inner terminal;
applying pressing force between the brim portion of the outer terminal and the brim portion of the inner terminal and crimping the columnar axle portion of the outer terminal into the hollow axle portion of the inner terminal, and curling-processing a tip of the hollow axle portion of the inner terminal to match the curved surface between the brim portion and the columnar axle portion of the outer terminal; and
further applying pressing force between the brim portion of the outer terminal and the brim portion of the inner terminal and forming a radially bulge-deformed portion in the columnar axle portion of the outer terminal.

## Patentansprüche

1. Versiegelte Batterie (10), die Folgendes umfasst:
eine äußere Hülle (11) mit einem Mundteil;
eine Elektrodeneinheit (12), die einen Kollektor aufweist und im Inneren der äußeren Hülle aufgenommen ist;
eine Versiegelungsplatte (15), die in einem versiegelten Zustand an dem Mundteil der äußeren Hülle fixiert ist und eine Öffnung (15a) aufweist, die dort durchgebohrt ist;
einen Anschluss, der im Inneren der Öffnung der Versiegelungsplatte installiert ist und mit dem Kollektor elektrisch verbunden ist;
wobei der Anschluss einschließt:
einen äußeren Anschluss (30) mit einer massiven flachen Nietenform, der einen Randteil (28) und einen säulenförmigen Achsenteil (29), zwischen denen eine gekrümmte Oberfläche (29a) gebildet ist, aufweist; und
einen inneren Anschluss (27) mit einer hohlen flachen Nietenform, der einen Randteil (25) und einen hohlen Achsenteil (26) aufweist,
ein erstes isolierendes Element (31) mit einer Öffnung (31a) und
ein zweites isolierendes Element (32) mit einer Öffnung (32a),
wobei der hohle Achsenteil des inneren Anschlusses, vom Inneren der äußeren Hülle, durch die Öffnung des ersten isolierenden Elements, die in die Versiegelungsplatte gebohrte Öffnung und die Öffnung des zweiten isolierenden Elements, in der angegebenen Reihenfolge, in einem solchen Zustand, dass er von der Versiegelungsplatte isoliert ist, eingeführt wird,
der säulenförmige Achsenteil des äußeren Anschlusses, vom Äußeren der äu-βeren Hülle, in den hohlen Achsenteil des inneren Anschlusses eingeführt und daran festgequetscht wird, sodass ein radial ausbuchtungsverformter Teil in einem Zwischenteil des säulenförmigen Achsenteils gebildet wird und
der hohle Achsenteil des inneren Anschlusses in eine Form verformt wird, die mit dem radial ausbuchtungsverformten Teil des säulenförmigen Achsenteils des äußeren Anschlusses übereinstimmt und an den säulenförmigen Achsenteil des äu-βeren Anschlusses festgequetscht wird; und eine Spitze des hohlen Achsenteils rollgeformt wird, um mit der gekrümmten Oberfläche zwischen dem Randteil und dem säulenförmigen Achsenteil des äußeren Anschlusses übereinzustimmen.

2. Versiegelte Batterie gemäß Anspruch 1, wobei der äußere Anschluss auf der ganzen inneren anschlussseitigen Oberfläche des Randteils davon mit einem ringförmigen Vorsprung (28a) versehen ist, wobei der Vorsprung die äußere Oberfläche des zweiten isolierenden Elements berührt und die rollgeformte Spitze des hohlen Achsenteils des inneren Anschlusses im Inneren des Raumes positioniert ist, der zwischen dem ringförmigen Vorsprung, dem säulenförmigen Achsenteil und der äu-βeren Oberfläche des zweiten isolierenden Elements gebildet ist.

3. Versiegelte Batterie gemäß Anspruch 1 oder 2, wobei das zweite isolierende Element entweder ganz um oder entlang eines Teils seiner äußeren Umfangoberfläche mit einem Vorsprung (31c) versehen ist, um so den äußeren Umfang des Randteils des äußeren Anschlusses zu umgeben.

4. Versiegelte Batterie gemäß einem der Ansprüche 1 bis 3, wobei die Versiegelungsplatte ganz um die Flächen, welche die Öffnung auf beiden Seiten davon umgeben, mit Vorsprüngen (15b)(15c) versehen ist.

5. Versiegelte Batterie gemäß Anspruch 4, wobei der Vorsprung (15b), der an der Versiegelungsplatte vorgesehen ist, der auf der äußeren anschlussseitigen Oberfläche gebildet ist, dem ringförmigen Vorsprung gegenüberliegt, wobei das zweite Isolierelement dazwischen eingefügt ist.

6. Versiegelte Batterie gemäß Anspruch 4 oder 5, wobei der Vorsprung (15c), der auf der Versiegelungsplatte vorgesehen ist, der auf der inneren anschlussseitigen Oberfläche gebildet ist, dem Randteil des inneren Anschlusses gegenüber liegt, wobei das erste Isolierelement dazwischen eingefügt ist.

7. Verfahren zum Bilden einer Anschlusseinheit für eine versiegelte Batterie (10), wobei die Batterie eine äußere Hülle (11) mit einem Mundteil, eine Elektrodeneinheit (12), die einen Kollektor aufweist und im Inneren der äußeren Hülle aufgenommen ist, eine Versiegelungsplatte (15), die in einem versiegelten Zustand an dem Mundteil der äußeren Hülle fixiert ist und eine hindurch gebohrte Öffnung (15a) aufweist, einen Anschluss, der im Inneren der Öffnung der Versiegelungsplatte installiert und mit dem Kollektor elektrisch verbunden ist, einschließt, wobei das Verfahren umfasst:
Herstellen als den Anschluss eines äußeren Anschlusses (30) mit einer massiven flachen Nietenform, der einen Randteil (28) und einen säulenförmigen Achsenteil (29) aufweist, zwischen denen eine gekrümmte Oberfläche (29a) gebildet ist, eines inneren Anschlusses (27) mit einer hohlen flachen Nietenform, der einen Randteil (25) und einen hohlen Achsenteil (26) aufweist, der länger ist als der säulenförmige Achsenteil des äußeren Anschlusses, eines ersten isolierenden Elements (31), das eine Öffnung (31a) aufweist, und eines zweiten isolierenden Elements (32), das eine Öffnung (32a) aufweist;
Einführen des hohlen Achsenteils des inneren Anschlusses, vom Inneren der äußeren Hülle, durch die Öffnung des ersten isolierenden Elements, die in die Versiegelungsplatte gebohrte Öffnung und die Öffnung des zweiten isolierenden Elements, in der angegebenen Reihenfolge, in einem solchen Zustand, dass er von der Versiegelungsplatte isoliert ist;
Einführen des säulenförmigen Achsenteils des äußeren Anschlusses, vom Äu-βeren der äußeren Hülle, in den hohlen Achsenteil des inneren Anschlusses;
Beaufschlagen einer Druckkraft zwischen dem Randteil des äußeren Anschlusses und dem Randteil des inneren Anschlusses und Quetschen des säulenförmigen Achsenteils des äußeren Anschlusses in den hohlen Achsenteil des inneren Anschlusses und Rollformen einer Spitze des hohlen Achsenteils des inneren Anschlusses zum Übereinstimmen mit der gekrümmten Oberfläche zwischen dem Randteil und dem säulenförmigen Achsenteil des äußeren Anschlusses; und
weiteres Beaufschlagen von Druckkraft zwischen dem Randteil des äußeren Anschlusses und dem Randteil des inneren Anschlusses und Bilden eines radial ausbuchtungsverformten Teils in dem säulenförmigen Achsenteil des äußeren Anschlusses.

## Revendications

1. Batterie scellée (10) comprenant :
un bac externe (11) ayant une portion d'embouchure ,
un ensemble d'électrode (12) ayant un collecteur et logé à l'intérieur du bac externe ,
une plaque de scellement (15) fixée dans un état scellé à la portion d'embouchure du bac externe et ayant une ouverture (15a) qui est percée à travers celle-ci ,
une borne installée à l'intérieur de l'ouverture de la plaque de scellement et connectée électriquement au collecteur ,
la borne comprenant :
- une borne externe (30), en forme de rivet plat et plein, qui a une portion de rebord (28) et une portion d'axe en colonne (29) entre lesquelles est formée une surface arrondie (29a) et
- une borne interne (27), en forme de rivet plat et creux, qui a une portion de rebord (25) et une portion d'axe creux (26),
- un premier organe isolant (31) ayant une ouverture (31a) et
- un second organe isolant (32) ayant une ouverture (32a),
la portion d'axe creux de la borne interne étant insérée, depuis l'intérieur du bac externe, à travers l'ouverture du premier organe isolant, l'ouverture étant percée dans la plaque de scellement, et l'ouverture du second organe isolant, dans l'ordre donné, dans un état tel qu'elle est isolée de la plaque de scellement,
la portion d'axe en colonne de la borne externe étant insérée, depuis l'extérieur du bac externe, dans la portion d'axe creux de la borne interne et sertie sur celle-ci, de sorte qu'une portion déformée de renflement radial est formée dans une portion intermédiaire de la portion d'axe en colonne, et
la portion d'axe creux de la borne interne se déformant en une forme qui correspond à la portion déformée de renflement radial de la portion d'axe en colonne de la borne externe, et étant sertie sur la portion d'axe en colonne de la borne externe et une pointe de la portion d'axe creux étant formée par bordage afin de correspondre à la surface arrondie entre la portion de rebord et la portion d'axe en colonne de la borne externe.

2. Batterie scellée selon la revendication 1, dans laquelle la borne externe est disposée tout le long de la surface côté borne interne de sa portion de rebord avec une protubérance annulaire (28a), la protubérance venant en contact avec la surface externe du second organe isolant, et dans laquelle la pointe formée par bordage de la portion d'axe creux de la borne interne est positionnée à l'intérieur de l'espace formé entre la protubérance annulaire, la portion d'axe en colonne, et la surface externe du second organe isolant.

3. Batterie scellée selon la revendication 1 ou 2, dans laquelle le second organe isolant est disposé soit tout autour, soit le long d'une partie de sa surface de circonférence externe avec une protubérance (31c), de façon à encercler la circonférence externe de la portion de rebord de la borne externe.

4. Batterie scellée selon l'une quelconque des revendications 1 à 3, dans laquelle la plaque de scellement est disposée tout autour des zones entourant l'ouverture sur ses deux faces avec des protubérances (15b) (15c).

5. Batterie scellée selon la revendication 4, dans laquelle la protubérance (15b), disposée sur la plaque de scellement, formée sur la surface côté borne externe est opposée à la protubérance annulaire, avec le second organe isolant interposé.

6. Batterie scellée selon la revendication 4 ou 5, dans laquelle la protubérance (15c), disposée sur la plaque de scellement, formée sur la surface côté borne interne est opposée à la portion de rebord de la borne interne, avec le premier organe isolant interposé.

7. Procédé de formation d'une unité de borne pour une batterie scellée (10), la batterie comprenant un bac externe (11) ayant une portion d'embouchure, un ensemble d'électrode (12) ayant un collecteur et logé à l'intérieur du bac externe, une plaque de scellement (15) fixée dans un état scellé à la portion d'embouchure du bac externe et ayant une ouverture (15a) qui y est percée, une borne installée à l'intérieur de l'ouverture de la plaque de scellement et connectée électriquement au collecteur, le procédé comprenant :
la préparation en tant que borne d'une borne externe (30), en forme de rivet plat et plein, qui a une portion de rebord (28) et une portion d'axe en colonne (29) entre lesquelles est formée une surface arrondie (29a), une borne interne (27), en forme de rivet plat et creux, qui a une portion de rebord (25) et une portion d'axe creux (26) qui est plus longue que la portion d'axe en colonne de la borne externe, un premier organe isolant (31) ayant une ouverture (31a), et un second organe isolant (32) ayant une ouverture (32a) ,
l'insertion de la portion d'axe creux de la borne interne, depuis l'intérieur du bac externe, à travers l'ouverture du premier organe isolant, l'ouverture étant percée dans la plaque de scellement, et l'ouverture du second organe isolant, dans l'ordre donné, dans un état tel qu'elle est isolée de la plaque de scellement ,
l'insertion de la portion d'axe en colonne de la borne externe, depuis l'extérieur du bac externe, dans la portion d'axe creux de la borne interne ,
l'application d'une force de pression entre la portion de rebord de la borne externe et la portion de rebord de la borne interne et le sertissage de la portion d'axe en colonne de la borne externe dans la portion d'axe creux de borne interne, et le traitement de bordage d'une pointe de la portion d'axe creux de la borne interne afin de correspondre à la surface arrondie entre la entre la portion de rebord et la portion d'axe en colonne de la borne externe et
l'application supplémentaire d'une force de pression entre la portion de rebord de la borne externe et la portion de rebord de la borne interne et la formation d'une portion déformée de renflement radial dans la portion d'axe en colonne de la borne externe.
